# EUROPÄISCHE PATENTSCHRIFT

(11) **EP 0 925 904 B1**
(45) Veröffentlichungstag und Bekanntmachung des Hinweises auf die Patenterteilung: **25.07.2001**
(21) Anmeldenummer: 98890375.3
(22) Anmeldetag: 21.12.1998
(51) Int. Cl.: B29C 47/68, B01D 29/05, B01D 29/64, B01D 29/96

(54) **Verfahren und Vorrichtung zum Siebwechsel an einer Filtervorrichtung**
Method and device for changing the screen of a filtering apparatus
Procédé et dispositif pour changer le tamis d'un dispositif de filtration

(30) Priorität: 23.12.1997 AT 217897
(43) Veröffentlichungstag der Anmeldung: 30.06.1999
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.

(56) Entgegenhaltungen:
- EP-A- 0 674 930
- WO-A-97/26973
- GB-A- 2 184 035
- US-A- 5 236 583

## Beschreibung

Die Erfindung bezieht sich auf ein Verfahren zum Siebwechsel an einer Filtervorrichtung für die Reinigung von flüssigen oder plastischen Massen, vorzugsweise plastifizierten Kunststoffen, wobei zumindest eine in einem Trägerkörper gelagerte, das Sieb an der Abstromseite abstützende Stützlochplatte zusammen mit dem Sieb mittels des Trägerkörpers für den Siebwechsel zwischen einer im Strom der zu filtrierenden Masse liegenden Betriebsstellung und einer außerhalb dieses Stromes liegenden Siebwechselstellung bewegt wird, in welcher Siebwechselstellung das Sieb ausgewechselt wird.

Weiters bezieht sich die Erfindung auf eine Vorrichtung zur Durchführung eines solchen Verfahrens.

Die bekannten Verfahren zum Siebwechsel bei Filtervorrichtungen der eingangs beschriebenen Art benötigen zum Wechsel der verstopften Filtersiebe erheblichen Personalaufwand. Es muß nämlich zunächst der Siebträgerkörper, zumeist ein Flachschieber oder ein Bolzen, aus dem Filterblock in die Siebwechselstellung ausgefahren werden, worauf erst das Filtersieb mittels eines Werkzeuges, z.B. eines Hakens oder einer Zange, aus dem das Filtersieb aufnehmenden Siebnest herausgenommen werden kann. Sodann muß insbesondere die äußere Umfangsfläche des Siebnestes von anhaftenden Verunreinigungen, etwa mittels einer Spachtel, gereinigt werden, worauf ein neues Filtersieb oder Filterpaket in das gereinigte Siebnest eingelegt und der Siebträgerkörper in den Filterblock in die Betriebsstellung (Filtrierstellung) eingefahren wird. Diese Schritte werden stets von Hand ausgeführt und benötigen zu ihrer Durchführung das entsprechende Personal. Hiezu kommt, daß bei stark kontaminierten Flüssigkeiten, insbesondere thermoplastischer Recyclingware, diese Vorgänge oft mehrmals pro Stunde durchgeführt werden müssen. Wenn das Siebnest vor dem Einlegen des neuen Siebes gründlich gereinigt werden soll, so benötigt diese Arbeit eine gewisse Mindestzeit. Die Belastung des Personals durch die beschriebenen Vorgänge ist daher erheblich.

Es ist bekannt (EP-A1 674 930, US-A 5,236,583), eine auszupressende Masse auf eine durch eine Stützlochplatte abgestützte Filterplatte aufzubringen, die nach der Auspressung in Durchströmungsrichtung der Stützlochplatte abgesenkt wird, um den ausgepreßten Massekuchen von der Filterplatte abstreifen zu können. Diese Vorgangsweisen und die hiefür bekannten Vorrichtungen sind aber zur Lösung des oben beschriebenen Problemes nicht geeignet.

Die Erfindung setzt sich zur Aufgabe, das eingangs beschriebene Verfahren so zu verbessern, daß mit weniger Personal, gegebenenfalls sogar ohne Personal, ausgekommen werden kann, ohne daß die Betriebssicherheit der Filtervorrichtung darunter leidet. Weiters setzt sich die Erfindung zur Aufgabe, das Verfahren so zu verbessern, daß es rascher durchgeführt werden kann, sodaß die Zeit, welche für den Siebwechsel erforderlich ist, verkürzt werden kann, sodaß die Kontinuität des Betriebes der gesamten Anlage verbessert wird.

Die Erfindung löst diese Aufgabe dadurch, daß nach Erreichen der Siebwechselstellung die Stützlochplatte samt dem Sieb entgegen ihrer Durchströmungsrichtung im Trägerkörper zumindest soweit verschoben wird, daß die zustromseitige Stirnfläche der Stützlochplatte bündig liegt mit der benachbarten Oberfläche des Trägerkörpers, worauf das Sieb mit den daran anhaftenden Verunreinigungen von der Stützlochplatte entfernt wird, und daß schließlich nach Anbringung eines neuen Siebes und Zurückbewegen der Stützlochplatte im Trägerkörper in die Ausgangsstellung, der Trägerkörper wieder in die Betriebsstellung gebracht wird. Die erwähnte Verschiebung der Stützlochplatte zusammen mit dem an ihr anliegenden, verschmutzten Sieb nach vorne (d.h. entgegen der Strömungsrichtung des zu reinigenden Materiales) hat zwei wesentliche Vorteile: Einerseits läßt sich das verschmutzte Sieb von der Stützlochplatte leichter entfernen, wenn die Stützlochplatte an der Stirnfläche des Trägerkörpers liegt, da nunmehr nicht mehr in eine Höhlung hineingegriffen werden muß, um das Sieb ergreifen und entfernen zu können. Andereseits bewirkt die erwähnte Verschiebung der Stützlochplatte, daß die Umfangsfläche des Siebnestes (das ist die die Stützlochplatte samt dem Sieb aufnehmende Höhlung) durch die an ihr entlanggleitende Stützlochplatte automatisch gereinigt wird, wobei die Stützlochplatte die Rolle eines Schabers spielt. Die vom Umfang des Siebnestes hiebei abgekratzten Verunreinigungen sammeln sich hiebei an der zustromseitigen Oberfläche des Siebes, sodaß sie bei der Abnahme des Siebes beim Siebwechselvorgang zusammen mit dem Sieb entfernt werden. Einzige Voraussetzung für diesen Effekt ist, daß die Stützlochplatte passend im Siebnest liegt, in diesem in der erwähnten Richtung bis zur erwähnten Grenzstellung verschoben werden kann und hiebei entlang der Umfangsfläche des Siebnestes gleitet.

Die Erfindung kann aber noch in einer weiteren Weise perfektioniert werden: Gemäß einer bevorzugten Ausführungsform des erfindungsgemäßen Verfahrens wird nämlich das Sieb von der Stützlochplatte mittels eines an der oder parallel zur Oberfläche des Trägerkörpers geführten Werkzeuges, z.B. eines Schabers, einer Spachtel oder eines Messers abgestreift. Dieser Vorgang ist wesentlich einfacher durchführbar als das bisher übliche Entfernen des Siebes mittels einer Zange oder eines Hakens und hat darüberhinaus den Vorteil einer besseren Reinigung der Stützlochplatte, da bei der bisher üblichen Vorgangsweise stets die Gefahr bestand, daß vom Sieb getragene Verunreinigungen bei der Entfernung des Siebes vom Sieb auf die Stützlochplatte gelangen und dann womöglich im Verlaufe des weiteren Betriebes durch die Groblöcher der Stützlochplatte hindurch in den Abstromkanal und somit in das gereinigte Material eintreten.

Gemäß einer bevorzugten Ausführungsform des erfindungsgemäßen Verfahrens werden die Bewegungen der Stützlochplatte und bzw. oder des Werkzeuges von Automaten durchgeführt. Dadurch läßt sich der Personalaufwand auf ein Minimum reduzieren, gegebenenfalls sogar völlig vermeiden. Die Vorschiebung und Zurückziehung der Stützlochplatte in die vorgeschobene Stellung bzw. wieder zurück in die Ausgangsstellung bereitet automatenmäßig überhaupt keine Probleme, ebenso nicht die Bewegung der Spachtel oder dergleichen zwecks Abstreifung des verschutzten Siebes von der Stützlochplatte. Eine gegebenenfalls aus Sicherheitsgründen zweckmäßige optische Kontrolle kann über Video auch von einem entfernten Ort aus erfolgen.

Die erfindungsgemäße Vorrichtung zur Durchführung des erfindungsgemäßen Verfahrens geht aus von einer Konstruktion, bei welcher in einem Gehäuse der Filtervorrichtung zumindest ein Trägerkörper für ein von einer Stützlochplatte abstromseitig abgestütztes Sieb verlagerbar gelagert ist, welcher zwischen einer Betriebsstellung und einer Siebwechselstellung hin und her bewegbar ist, in welcher Betriebsstellung das Sieb im Weg der über einen Zustromkanal zugeführten zu reinigenden Flüssigkeit liegt, wogegen in der Siebwechselstellung das Sieb für den Siebwechselvorgang zugänglich ist. Ausgehend hievon besteht die Erfindung darin, daß die Stützlochplatte in einer Führung des Trägerkörpers in und entgegen ihrer Durchströmungsrichtung verschiebbar gelagert ist, sodaß die Stützlochplatte zumindest in eine Stellung verschiebbar ist, in der ihre zustromseitige Stirnfläche bündig liegt mit der benachbarten Oberfläche des Trägerkörpers, daß für diese Vorschiebung der Stützlochplatte ein Antrieb vorgesehen ist, der mit der Stützlochplatte bewegungsschlüssig, jedoch lösbar verbunden ist und daß zustromseitig der Siebwechselstellung des Trägerkörpers ein Werkzeug vorgesehen ist, mit welchem in der vorgeschobenen Stellung der Stützlochplatte das Sieb von dieser automatisch entfernbar ist. Wie bereits erwähnt, bewirkt die Vorschiebung der Stützlochplatte in ihrer Führung, daß diese Führung, welche ja das Siebnest bildet, im Zuge der Vorschiebung automatisch durch die an ihr geführte Stützlochplatte gereinigt wird. Die automatische Betätigung des Werkzeuges, mit welchem das Sieb von der Stützlochplatte in deren vorgeschobener Stellung entfernt wird, erspart das ansonsten für diesen Vorgang erforderliche Personal und ist rascher und verläßlicher durchführbar als die händische Vorgangsweise. Dadurch können, wenn während des Siebwechselvorganges kein anderes Sieb in der Betriebsstellung ist, die Stillstandszeiten der gesamten Filtervorrichtung verringert werden. Selbst wenn ein parallel geschaltetes Sieb zur Verfügung steht, bedeutet der Siebwechsel immer noch einen Kapazitätsverlust und damit einen Druckabfall an der Abstromseite der Vorrichtung, wenn nicht durch gesonderte Maßnahmen eine Kompensation erfolgt, was aber wieder einen erhöhten Aufwand bedeutet. Die Verkürzung der Zeit, welche für den Siebwechselvorgang erforderlich ist, bringt daher auch betriebstechnisch und wirtschaftlich erhebliche Vorteile.

Gemäß einer Weiterbildung der Erfindung ist das Werkzeug ein Schaber, eine Spachtel oder ein Messer, der bzw. die bzw. das an einer Führung verschiebbar gelagert und durch einen Antrieb bewegbar ist. Dies ist konstruktiv einfacher durchführbar als z.B. eine automatische Zange oder sonstige Einrichtung zur Entfernung des Siebes von der Stützlochplatte. Zudem wird durch den Abschabvorgang, welchen die Spachtel oder das Messer vollführt, auch die Stützlochplatte gut gereinigt. Gemäß einer bevorzugten Ausführungsform der Erfindung ist das Werkzeug an der zustromseitigen Stirnfläche des Trägerkörpers geführt, was konstruktiv keinerlei Schwierigkeiten macht, insbesondere wenn der Trägerkörper in bekannter Weise als Flachschieber ausgebildet ist. Eine gesonderte Führung für das Werkzeug kann daher entfallen.

Die Zurückbewegung der Stützlochplatte in ihrer Führung in die Ausgangsstellung kann vor oder nach Anbringung des neuen Siebes erfolgen, günstiger ist die letztere Variante. Zur Durchführung dieser Bewegung der Stützlochplatte ist im Rahmen der Erfindung vorgesehen, daß der Antrieb für die Verschiebung der Stützlochplatte einen Stempel hat, der an der abstromseitigen Stirnseite der Stützlochplatte anliegt und vorzugsweise mit dieser auch zugschlüssig, jedoch lösbar verbunden ist. Die lösbare Verbindung zwischen dem Antrieb und der Stützlochplatte ist erforderlich, um nach Durchführung des Siebwechselvorganges den Trägerkörper wieder so zurückbewegen zu können, daß das Sieb wieder in der Betriebsstellung liegt, ohne daß diese Bewegung des Trägerkörpers durch den Antrieb für die Stützlochplatte behindert wird. Die Ausbildung dieses Antriebes als Stempel ist die einfachste Ausführungsform und hat den Vorteil, daß am Stempel problemlos Kupplungsorgane angeordnet werden können, mit denen die zugschlüssige Verbindung zwischen Stützlochplatte und Stempel lösbar erfolgt. Auf diese Weise ist auch die Zurückziehung der Stützlochplatte mittels des Antriebes, durch welchen die Vorschubbewegung der Stützlochplatte erfolgt, durchführbar, sodaß ein gesonderter Antrieb für die Zurückbewegung der Stützlochplatte entbehrlich ist. Sobald diese zugschlüssige Verbindung gelöst wird, steht der Verlagerung des Trägerkörpers nichts mehr im Weg.

Die bestmöglichste Reinigung der Führung bei der Verschiebung der Stützlochplatte ergibt sich, wenn der Querschnitt der Führung gleich ist dem Querschnitt der Stützlochplatte. Ferner ist es zweckmäßig, die Führung zwischen ihrem zustromseitigen Ende und der Stützlochplatte frei von fremden Bauteilen zu halten. Ist dies nicht der Fall, so müssen diese Bauteile vor der Verschiebung der Stützlochplatte entfernt werden.

Im Rahmen der Erfindung ist es ferner besonders günstig, wenn ein Automat für die beim Siebwechselvorgang erfolgende Einlegung des neuen Siebes vorgesehen ist. Hiefür geeignete Automaten stehen zur Verfügung.

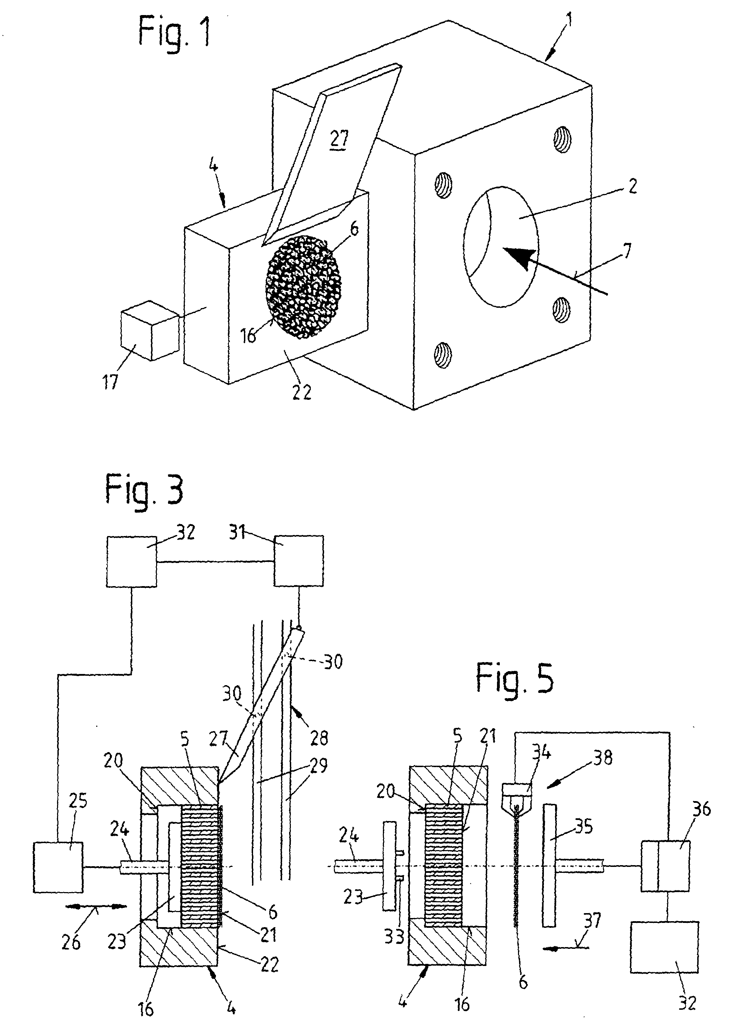

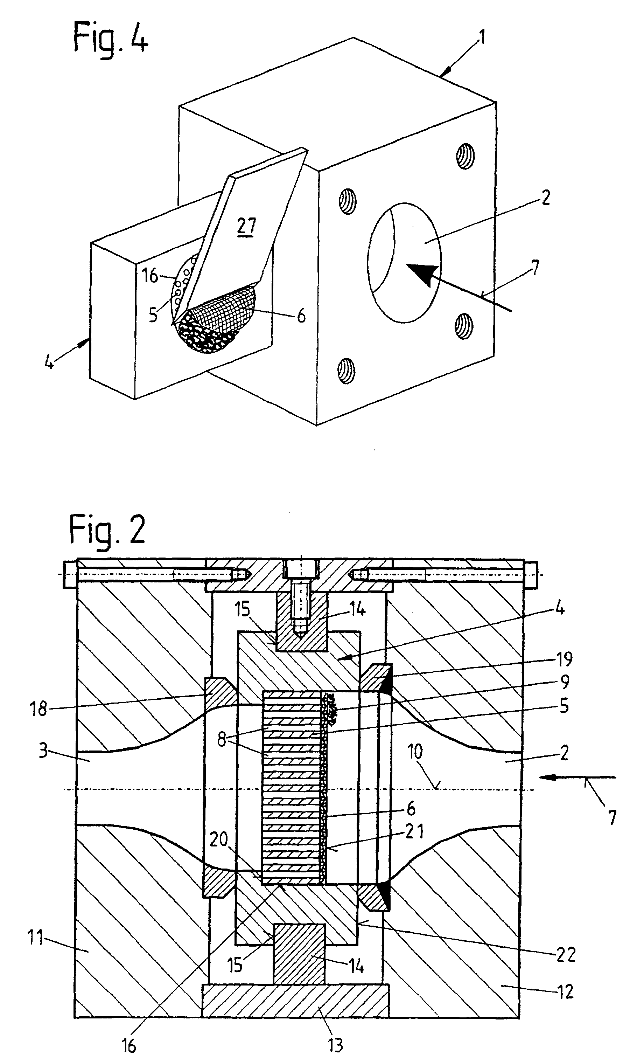

In der Zeichnung ist die Erfindung anhand eines Ausführungsbeispieles schematisch dargestellt. Fig. 1 zeigt die Filtervorrichtung in axonometrischer Darstellung in der für den Siebwechselvorgang ausgefahrenen Stellung des Trägerkörpers. Fig.2 ist ein Schnitt durch die Achse des Zu- und Abstromkanales der Filtervorrichtung. Fig.3 zeigt vereinfacht die Vorrichtung kurz vor Beginn der Entfernung des verschmutzten Siebes von der Stützlochplatte. Fig.4 zeigt in einer Ansicht ähnlich Fig.1 die Entfernung des verschmutzten Siebes und Fig.5 zeigt in einem Schnitt ähnlich Fig.3 den eigentlichen Siebwechselschritt.

Die Vorrichtung nach Fig.1 hat ein als Block ausgebildetes Gehäuse 1, das einen Zustromkanal 2 (siehe auch Fig.2) und einen Abstromkanal 3 aufweist. Zwischen den beiden Kanälen 2, 3 liegt im Betriebszustand der Vorrichtung ein als Flachschieber ausgebildeter Trägerkörper 4 für eine in ihn eingesetzte Stützlochplatte 5, die ein Sieb 6 gegen den Druck der in Richtung des Pfeiles 7 über den Zustromkanal 2 zugeführten, zu reinigenden Flüssigkeit, insbesondere verschmutztes, zu Recyclingzwecken zu reinigendes thermoplastisches Kunststoffmaterial, abstützt. In bekannter Weise ist die Stützlochplatte 5 mit mehreren Durchlassöffnungen 8 versehen, deren Querschnitt wesentlich größer ist als jener der Öffnungen des Siebes 6. Unter "Sieb" ist hiebei ein Filtersieb zu verstehen, das einschichtig oder als Filterpakte mehrschichtig ausgebildet sein kann. An der Zustromseite des Siebes 6 sammeln sich die vom Sieb zurückgehaltenen Verunreinigungen 9 an. Die gereinigte Flüssigkeit kann hingegen durch das Sieb 6 hindurchtreten und strömt über die Durchlassöffnungen 8 der Stützlochplatte 5 in den Abstromkanal 3. Die Strömungsrichtung entspricht jener des Pfeiles 7.

Für Zwecke des Siebwechsels bei verschmutztem Sieb ist der Trägerkörper 4 im Gehäuse 1 verlagerbar ausgebildet. Diese Verlagerung kann eine Verschwenkung sein, günstiger ist jedoch die dargestellte lineare Verschiebbarkeit des Trägerkörpers 4 quer zur Achse 10 der beiden koaxialen Kanäle 2, 3. Hiefür sind an den Innenwänden eines mit zwei Seitenteilen 11, 12 des Gehäuses 1 verschraubten Mittelteiles 13 Führungen 14 in Form zweier quer zur Achse 10 verlaufender Leisten befestigt, an denen der Trägerkörper 4 mit Längsnuten 15 geführt ist. Dadurch kann der Trägerkörper 4 aus der in Fig.2 dargstellten Betriebsstellung, in welcher das Sieb 6 in Strom der zu filtrierenden Flüssigkeit liegt, und einer Siebwechselstellung hin und her bewegt werden, in welcher Siebwechselstellung das Sieb 6 außerhalb der Kanäle 2, 3 und auch außerhalb des Gehäuses 1 liegt, sodaß das von einer Zylinderbohrung mit Kreisquerschnitt gebildete Siebnest, welches eine Führung 16 für die in Richtung des Doppelpfeiles 26 in der Führung 16 verschiebbar gelagerte Stützlochplatte 5 bildet, frei zugänglich ist. Die Stützlochplatte 5 ist in die Führung 16 passend eingesetzt. Diese Siebwechselstellung ist in den Fig.1 und 4 dargestellt. Die erwähnte Querverschiebung des Trägerkörpers 4 geschieht mittels eines Antriebes 17 beliebiger Art (Fig.1), z.B. eines doppelt wirkenden hydraulischen Zylinderaggregates.

Der Trägerkörper 4 ist in Bezug auf die beiden Gehäusebauteile 11, 12 durch in diese eingesetzt Ringkörper 18, 19 abgedichtet, deren Innendurchmesser gleich ist dem Innendurchmesser des benachbarten Abschnittes des die Führung 16 bildenden Siebnestes. Wie Fig.2 zeigt, ist dieser Innendurchmesser mit einer stufenförmigen Absetzung 20 versehen, an der sich die Stützlochplatte 5, gesehen in Strömungsrichtung des zu reinigenden Mediums (Pfeil 7) abstützen kann. Bei der erwähnten Verschiebung des Trägerkörpers 4 gleiten die beiden Ringkörper 18, 19 an der zustromseitigen bzw. abstromseitigen Stirnfläche des Trägerkörpers 4.

Die Stützlochplatte 5 und das von ihr getragene Sieb 6 sind im Siebnest 16 aus der in Fig.2 dargestellten Betriebsstellung entgegen der Richtung des Pfeiles 7 zumindest soweit verschiebbar, daß die zustromseitige Stirnfläche 21 der Stützlochplatte 5 bündig liegt mit der benachbarten Oberflächenpartie der zustromseitigen Stirnfläche 22 der Trägerkörpers 4. Diese Verschiebung erfolgt in der in den Fig. 1 und 4 dargestellten Siebwechselstellung des Trägerkörpers 4, in welcher das Siebnest 16 für den Siebwechselvorgang sowohl von der Zustromseite als auch von der Abstromseite her frei zugänglich ist. Zur Durchführung von der Verschiebung der Stützlochplatte 5 im Siebnest 16 dient ein von der Abstromseite zum Siebnest 16 geführter, auf die Abstromseite der Stützlochplatte 5 drückender Stempel 23 (Fig.3), der am einen Ende einer Stange 24 angeordnet ist, die durch einen Antrieb 25, z.B. einen Hydraulikzylinder, in Richtung des Doppelpfeiles hin und her bewegbar ist. In Fig.3 ist diese Grenzstellung der Stützlochplatte 5 dargestellt, in welcher ihre zustromseitige Stirnfläche bündig liegt mit der benachbarten Stirnfläche 22 des Trägerkörpers 4. Dies bedeutet, daß das von der Stützlochplatte 5 getragene Sieb 6 vor dieser Oberfläche 22 des Trägerkörpers 4 liegt und daher mittels eines von einem Schaber gebildeten Werkzeuges 27 abgekratzt werden kann. Dieser Abkratzvorgang ist in Fig.4 dargestellt. Er kann händisch erfolgen, jedoch ist es vorzuziehen, den Schaber 27 automatisch zu betätigen. Hiezu ist der Schaber 27 an einer Führung 28 (Fig.3) geführt, die aus zwei parallel zur Stirnfläche 22 verlaufenden Führungsschienen 29 besteht, an denen der Schaber 27 mit Gleitstiften 30 oder dergleichen geführt ist. Das hintere Ende des Schabers 27 ist mit einem Antrieb 31, z.B. einem Hydraulikzylinder, verbunden, durch welchen der Schaber 27 in beiden Richtungen entlang der Führung 28 bewegt werden kann. Der Antrieb 31 wird ebenso wie der Antrieb 25 von einer gemeinsamen Steuerung 32 elektronisch gesteuert, sodaß die Vorschubbewegung der Stützlochplatte 5 und die Bewegung des Schabers 27 automatisiert sind. Diese Bewegungen können auch automatisch eingeleitet werden, wenn der Verschmutzungsgrad des Siebes 6 im Betrieb ein bestimmtes Maß überschritten hat. Dies kann z.B. in bekannter Weise durch Abfühlung des Druckes der zu reinigenden Flüssigkeit vor dem Sieb 6 festgestellt werden. Der hiefür verwendete Druckfühler leitet dann über die Steuerung 32 die erwähnten Arbeitsvorgänge ein.

Die Stützlochplatte 5 sitzt zweckmäßig eng passend in ihrem Siebnest 16. Dadurch werden an der kreiszylindrischen Wand des Siebnestes 16 anhaftende Verunreinigungen bei der Vorschubbewegung der Stützlochplatte 5 von deren Rand abgeschabt und an die Stirnfläche 22 des Trägerkörpers 4 gebracht, von wo sie zusammen mit dem verschmutzten Sieb 6 durch den Schaber 27 abgekratzt werden. Eine gesonderte Reinigung des Siebnestes 16, wie sie bisher von Hand nötig war, kann daher entfallen.

Sobald das verschmutzte Sieb 6 entfernt ist, muß ein neues Sieb an seine Stelle gebracht werden. Hiezu ist es zweckmäßig, zunächst die Stützlochplatte 5 im Siebnest 16 wieder zurückzuziehen oder zurückzudrücken bis ihre hintere Stirnfläche an der Absetzung 20 anliegt. Dies kann z.B. durch einen weiteren Stempel geschehen, der auf die zustromseitige Stirnfläche der Stützlochplatte 5 drückt und so diese Platte zurückschiebt. Einfacher ist es jedoch, auch für die Zurückziehung der Stützlochplatte 5 den Stempel 23 zu verwenden, der hiefür zugschlüssig mit der Stützlochplatte 5 verbunden werden muß. Hiefür ist eine geeignete Kupplung 33 (Fig.5) an der vorderen Stirnfläche des Stempels 23 vorgesehen, welche in geeigneter Weise mit der Stützlochplatte 5 zugschlüssig zusammenwirkt. Dies kann z.B. so erfolgen, daß die Kupplung 33 von zumindest einem Spreizfinger gebildet ist, der in die entsprechende Durchlaßöffnung 8 der Stützlochplatte 5 eingeführt und dort so aufgeweitet wird, daß die nötige zugschlüssige Verbindung gegeben ist. Sobald auf diese Weise die Stützlochplatte 5 in die in Fig.5 dargestellte zurückgezogene Stellung im Siebnest 16 gebracht ist, wird die Kupplung 33 gelöst, zweckmäßig automatisch durch die Steuerung 32, und der Stempel 23 weiter zurückgezogen, sodaß er außerhalb der Bewegungsbahn der Stützlochplatte 5 liegt, um deren Zurückschiebung in die Betriebsstellung nicht zu behindern.

Sobald die Stützlochplatte 5 in der in Fig. 5 dargstellten Stellung ist, kann das neue Sieb oder ein aus mehreren Schichten bestehende Siebpaket in das Siebnest 16 eingelegt werden. Dies kann von Hand erfolgen, aber es ist vorzuziehen, auch dies automatisch durchzuführen. Wie Fig.5 zeigt, ist hiefür ein Greifer 34 vorgesehen, welcher das neue Sieb 6 aus einem Magazin zuführt und vor das Siebnest 16 bringt. Sobald diese Stellung des Siebes erreicht ist, drückt ein weiterer Stempel 35 das Sieb 6 in das Siebnest 16 in Richtung des Pfeiles 37 ein. Die Bewegungen des Greifers 34 und des Stempels 35 erfolgen durch Antriebe 36, z.B. hydraulisch oder pneumatisch, die ebenfalls von der Steuerung 32 gesteuert werden.

Sobald das neue Sieb 6 eingelegt ist, erfolgt die Rückführung des Trägerkörpers 4 durch den Antrieb 17 in die in Fig.2 dargestellte Betriebsstellung, in welcher die Stützlochplatte 5 und das Sieb 6 wieder im Strom der zu reinigenden Flüssigkeit liegen. Der Siebwechselvorgang ist dann beendet.

Die Bewegungen der beiden Stempel 23, 35 und somit der Stützlochplatte 5 in Richtung der Pfeile 26, 37 erfolgen parallel zu jener Richtung, in welcher die Stützlochplatte 5 von der filtrierten Flüssigkeit durchströmt wird. Diese Richtung muß nicht unbedingt mit der durch den Pfeil 7 veranschaulichten Strömungsrichtung der Flüssigkeit in den Kanälen 2, 3 übereinstimmen, wenngleich dies die einfachste und daher zweckmäßigste Ausführungsform ist. Es ist nämlich möglich, die Verlagerung des Trägerkörpers 4 nicht durch eine normal zur Richtung des Pfeiles 7 erfolgende Verschiebung des Trägerkörpers 4 durchzuführen, sondern durch eine Verschwenkung, deren Schwenkachsenrichtung abweicht von jener des Pfeiles 7, zweckmäßig normal steht auf diese Richtung. Der Trägerkörper 4 kann auch um eine Achse verschwenkt werden, die in Richtung des Pfeiles 7 verläuft, insbesondere dann, wenn der Trägerkörper eine um diese Achse drehbare Scheibe ist.

Weiters ist ersichtlich, daß die Abschabung des verschmutzten Siebes 6 von der Stützlochplatte 5 auch in einer Stellung dieser Platte erfolgen kann, in welcher ihre Stirnfläche 21 über die benachbarte Stirnfläche 22 des Trägerkörpers 4 vorsteht, wenn nur die Führung 28 in geeigneter Weise angeordnet ist. Die in Fig. 3 dargstellte Ausführung ist jedoch günstiger, da die Führung des Schabers 27 an der Stirnfläche 22 bewirkt, daß auch die dem Siebnest 16 benachbarten Oberflächenpartie der Stirnfläche 22 gereinigt werden.

Der Greifer 34 und der Stempel 35 sind zweckmäßig zu einem gemeinsamen Automaten 38 vereinigt. Hiefür geeignete Automaten stehen zur Verfügung.

Ein weiterer Vorteil der Erfindung liegt darin, daß bestehende Vorrichtungen, die über einen in eine Siebwechselstellung verschiebbaren Trägerkörper für ein Sieb verfügen, problemlos nachrüstbar sind.

## Patentansprüche

1. Verfahren zum Siebwechsel an einer Filtervorrichtung für die Reinigung von flüssigen oder plastischen Massen, vorzugsweise plastifizierten Kunststoffen, wobei zumindest eine in einem Trägerkörper (4) gelagerte, das Sieb (6) an der Abstromseite abstützende Stützlochplatte (5) zusammen mit dem Sieb mittels des Trägerkörpers (4) für den Siebwechsel zwischen einer im Strom der zu filtrierenden Masse liegenden Betriebsstellung und einer außerhalb dieses Stromes liegenden Siebwechselstellung bewegt wird, in welcher Siebwechselstellung das Sieb (6) ausgewechselt wird, dadurch gekennzeichnet, daß nach Erreichen der Siebwechselstellung die Stützlochplatte (5) samt dem Sieb (6) entgegen ihrer Durchströmungsrichtung im Trägerkörper (4) zumindest soweit verschoben wird, daß die zustromseitige Stirnfläche (21) der Stützlochplatte (5) bündig liegt mit der benachbarten Oberfläche (22) des Trägerkörpers (4), worauf das Sieb (6) mit den daran anhaftenden Verunreinigungen von der Stützlochplatte (5) entfernt wird und daß schließlich nach Anbringung eines neuen Siebes (6) und Zurückbewegen der Stützlochplatte (5) im Trägerkörper (4) in die Ausgangsstellung der Trägerkörper (4) wieder in die Betriebsstellung gebracht wird.

2. Verfahren nach Anspruch 1, dadurch gekennzeichnet, daß das Sieb (6) von der Stützlochplatte (5) mittels eines an der oder parallel zur Oberfläche (22) des Trägerkörpers (4) geführten Werkzeuges, z.B. eines Schabers (27) einer Spachtel oder eines Messers, abgestreift wird.

3. Verfahren nach Anspruch 1 oder 2, dadurch gekennzeichnet, daß die Bewegung der Stützlochplatte (5) und/oder des Werkzeuges von Automaten durchgeführt werden.

4. Vorrichtung zur Durchführung des Verfahrens nach einem der Ansprüche 1, 2 oder 3, bei welchem in einem Gehäuse (1) der Filtervorrichtung zumindest ein Trägerkörper (4) für ein von einer Stützlochplatte (5) abstromseitig abgestütztes Sieb (6) verlagerbar gelagert ist, welcher Trägerkörper (4) zwischen einer Betriebsstellung und einer Siebwechselstellung hin und her bewegbar ist, in welcher Betriebsstellung das Sieb (6) im Weg der über einen Zustromkanal (2) zugeführten zu reinigenden Masse liegt, wogegen in der Siebwechselstellung das Sieb (6) für den Siebwechselvorgang zugänglich ist, dadurch gekennzeichnet, daß die Stützlochplatte (5) in einer Führung (16) des Trägerkörpers (4) in und entgegen ihrer Durchströmungsrichtung (Doppelpfeil 26) verschiebbar gelagert ist, sodaß die Stützlochplatte (5) zumindest in eine Stellung verschiebbar ist, in der ihre zustromseitige Stirnfläche (21) bündig liegt mit der benachbarten Oberfläche (22) des Trägerkörpers (4), daß für diese Vorschiebung der Stützlochplatte (5) ein Antrieb (25) vorgesehen ist, der mit der Stützlochplatte (5) bewegungsschlüssig, jedoch lösbar verbunden ist, und daß zustromseitig der Siebwechselstellung des Trägerkörpers (4) ein Werkzeug vorgesehen ist, mit welchem in der vorgeschobenen Stellung der Stützlochplatte (5) das Sieb (6) von dieser automatisch entfernbar ist.

5. Vorrichtung nach Anspruch 4, dadurch gekennzeichnet, daß das Werkzeug ein Schaber (27), eine Spachtel oder ein Messer ist, der bzw. die bzw. das an einer Führung (28) verschiebbar gelagert und durch einen Antrieb (31) bewegbar ist.

6. Vorrichtung nach Anspruch 5, dadurch gekennzeichnet, daß das Werkzeug an der zustromseitigen Stirnfläche (22) des Trägerkörpers (4) geführt ist.

7. Vorrichtung nach Anspruch 4, 5 oder 6, dadurch gekennzeichnet, daß der Antrieb (25) für die Verschiebung der Stützlochplatte (5) einen Stempel (23) hat, der an der abstromseitigen Stirnseite der Stützlochplatte (5) anliegt und vorzugsweise mit dieser auch zugschlüssig, jedoch lösbar verbunden ist.

8. Vorrichtung nach einem der Ansprüche 4 bis 7. dadurch gekennzeichnet, daß der Querschnitt der Führung (16) für die Stützlochplatte (5) gleich ist deren Querschnitt und daß die Führung (16) zwischen ihrem zustromseitigen Ende und der Stützlochplatte (5) frei von fremden Bauteilen ist.

9. Vorrichtung nach einem der Ansprüche 4 bis 8, dadurch gekennzeichnet, daß ein Automat (38) für die beim Siebwechselvorgang erfolgende Einlegung des neuen Siebes (6) vorgesehen ist.

## Claims

1. Method for changing the screen of a filtering apparatus for cleaning liquid or plastic masses, preferably plastified plastics, wherein at least one perforated support plate (5) lodged in a supporting body (4) supports the screen at the downstream side and is moved together with the screen by means of said supporting body (4) for changing the screen between an operative position within the flow of said mass to be filtered and a screen changing position outside said flow in which screen changing position said screen (6) is exchanged, characterised in that said perforated support plate (5) together with said screen (6), after having reached said screen changing position, is displaced in said supporting body (4) opposite to its cross-flow direction at least so far that the upstream sided front surface (21) of said perforated support plate (5) is flush with the adjacent surface (22) of the supporting body (4), after which said screen (6) together with any impurity adhering to it is removed from said perforated support plate (5), and that finally the supporting body (4) is moved back into said operative position after having mounted a new screen (6) and having moved said perforated support plate (5) back in said supporting body (4) into the initial position.

2. Method according to claim 1, characterised in that the screen (6) is stripped off from said perforated support plate (5) by means of a tool, e.g. a scraper (27), a spatula or a knife, which is guided along or parallel to said surface (22) of said supporting body (4).

3. Method according to claim 1 or 2, characterised in that the movement of said perforated support plate (5) and/or of said tool is carried out by an automatic.

4. Device for carrying out the method according to any of claims 1, 2 or 3, wherein at least one supporting body (4) for a screen (6) supported downstream by a perforated support plate (5) is displaceably lodged within a housing (1) of the filtering device, said supporting body (4) being moveable to and fro between an operative position and a screen changing position, in said operative position said screen (6) being within the path of said mass to be cleaned which is supplied through a supply channel (2), whereas in said screen changing position said screen (6) is accessible for a screen changing procedure, characterised in that said perforated support plate (5) is lodged within guide means (16) of the supporting body (4) and is displaceable in and opposite to its cross-flow direction (double arrow 26) so that said perforated support plate (5) may be displaced into at least one position in which its upstream sided front surface (21) is flush with the adjacent surface (22) of the supporting body (4), that drive means (25) are provided for this displacement of said perforated support plate (5) which are connected to said perforated support plate (5) in a manner for common movement, but is detachable, and that a tool is provided upstream of said screen changing position of said supporting body (4) by means of which said screen (6), in the displaced position of said perforated support plate (5), is automatically removable therefrom.

5. Device according to claim 4, characterised in that said tool comprises a scraper (27), a spatula or a knife which is displaceably lodged in guide means (28) and is moveable by drive means (31).

6. Device according to claim 5, characterised in that said tool is guided at said upstream sided front surface (22) of said supporting body (4).

7. Device according to any of claims 4, 5, or 6, characterised in that said drive means (25) for the displacement of said perforated support plate (5) comprises stamp means (23) engaging the downstream sided front surface of said perforated support plate (5), preferably being connected to it for common movement under tension, but detachably.

8. Device according to any of claims 4 to 7, characterised in that the cross-section of said guide means (16) for said perforated support plate (5) is equal to the cross-section of the latter, and that said guide means (16) are free of foreign components between their upstream sided end and said perforated support plate (5).

9. Device according to any of claims 4 to 8, characterised in that an automatic (38) is provided for inserting a new screen (6) when changing said screen.

## Revendications

1. Procédé pour changer le tamis d'un dispositif de filtration pour nettoyer des masses liquidés ou plastiques, préférablement des matières plastiques plastifiées, dans lequel au moins une plaque perforée de soutien (5) logée dans un corps porteur (4) supporte le tamis (6) du côté aval et est mue conjointement avec le tamis au moyen du corps porteur (4) pour changer ledit tamis entre une position de marche dans le courant de la masse à filtrer et une position de changement du tamis hors ce courant, le tamis (6) étant changé dans cette position de changement du tamis, caractérisé en ce que la plaque perforée de soutien (5) conjointement avec le tamis (6), après avoir atteint la position de changement du tamis, est déplacée dans le corps porteur (4) en sens inverse à la direction du courant au moins autant, que la surface frontale (21) au côté amont de la plaque perforée de soutien (5) soit affleurée avec la surface adjacente (22) du corps porteur (4), après lequel le tamis (6) avec les impuretés adhérants à lequel est enlevé de la plaque perforée de soutien (5), et en ce que finalement le corps porteur (4) est mû de nouveau dans sa position de marche, après avoir monté un tamis (6) nouveau et après avoir mû la plaque perforée de soutien (5) dans le corps porteur (4) retour dans la position initiale.

2. Procédé selon la revendication 1, caractérisé en ce que le tamis (6) est enlevé de la plaque perforée de soutien (5) au moyen d'un outil, par exemple d'un grattoir (27), d'une spatule ou d'un couteau, qui est guidé le long or parallèlement à la surface (22) du corps porteur (4).

3. Procédé selon la revendication 1 ou 2, caractérisé en ce que le mouvement de la plaque perforée de soutien (5) et/ou de l'outil est effectué par des machines automatiques.

4. Dispositif pour l'exécution du procédé selon une des revendications 1, 2 ou 3, dans lequel au moins un corps porteur (4) pour un tamis (6) supporté d'une manière déplaçable à la côté aval par une plaque perforée de soutien (5) est logé dans un boîtier (1) du dispositif de filtrage, ledit corps porteur (4) étant capable d'un mouvement alternatif entre une position de marche et une position de changement du tamis, le tamis (6) dans la position de marche étant dans le chemin de la masse à nettoyer admise par un canal d'amenée (2), tandis que dans ladite position de changement du tamis le tamis (6) est accessibile pour un fonctionnement de changement du tamis, caractérisé en ce que la plaque perforée de soutien (5) est logée dans un moyen de guidage (16) du corps porteur (4) et est déplaçable en direction et en sens inverse à la direction du courant (double flèche 26), de manière que la plaque perforée de soutien (5) peut être déplacée dans au moins une position, dans laquelle sa surface frontale (21) au côté amont est affleurée avec la surface adjacente (22) du corps porteur (4), que des moyen d'entraînement (25) sont prévus pour ce déplacement de la plaque perforée de soutien (5), qui sont reliés à la plaque perforée de soutien (5) de façon à mouvoir en commun, mais est détachable, et que un outil est prévu en amont de la position de changement du tamis du corps porteur (4), par lequel le tamis (6), dans la position déplacée de la plaque perforée de soutien (5), peut être enlevé de celle-ci automatiquement.

5. Dispositif selon la revendication 4, caractérisé en ce que l'outil est un grattoir (27), une spatule ou un couteau, qui est logé de manière déplaçable le long d'un moyen de guidage (28) et peut être mû par des moyens d'entraînement (31).

6. Dispositif selon la revendication 5, caractérisé en ce que l'outil est guidé le long de la côté amont de la surface frontale (21) du corps porteur (4).

7. Dispositif selon la revendication 4, 5 ou 6, caractérisé en ce que les moyens d'entraînement (25) pour déplacer la plaque perforée de soutien (5) comprennent un piston (23), porté bien à la surface frontale en aval de la plaque perforée de soutien (5) et est, de préférence, lié avec celle-ci de façon à mouvoir en commun sous tension, mais de manière détachable.

8. Dispositif selon une des revendications 4 à 7 quelconque, caractérisé en ce que la section transversale du moyen de guidage (16) pour la plaque perforée de soutien (5) est égale à la section transversale de celle-ci, et que ledit moyen de guidage (16) est libre des composantes étrangères entre son extrémité en amont et la plaque perforée de soutien (5).

9. Dispositif selon une des revendications 4 à 8 quelconque, caractérisé en ce qu'une machine automatique (38) est prévue pour insérer un tamis (6) nouveau, lorsqu'on change le tamis.
